# EUROPEAN PATENT APPLICATION

(11) **EP 4 592 008 A1**
(43) Date of publication of application: **30.07.2025**
(21) Application number: 25152962.4
(22) Date of filing: 20.01.2025
(51) Int. Cl.: B22F 7/06, B22F 10/25, B23K 26/342, B23P 6/00, F01D 5/00, B22F 10/40, B22F 5/00, B22F 5/04

(54) **USE OF SACRIFICIAL SURFACE DURING DIRECTED ENERGY DEPOSITION REPAIR PROCESS**

(30) Priority: 26.01.2024 US 202418424314
(71) Applicant: RTX Corporation, Farmington, CT 06032 (US)
(72) Inventor: BREITZMANN, Peter, Farmington, 06032 (US)
(74) Representative: Dehns

(57) **Abstract**

A method of repairing an aerospace part (10) including inspecting the aerospace part (10), made from a base material, to identify a worn or defective repair region (20) that requires repair. A sacrificial backing material (24), which serves as a platform for deposition of repair layers (14) during a repair procedure, is attached to the aerospace part (10). A repair procedure is performed on the repair region (20) using a directed energy deposition (DED) energy/powder head (18) after which the sacrificial backing material (24) is removed from the aerospace part (10) and the aerospace part (10) is returned to service. The repair procedure includes depositing, using the DED energy/powder head (18), a first layer of DED powder material in the repair region (20); melting and consolidating, using energy from the DED energy/powder head (18), the first layer of DED powder material to form a first repair layer (14) having a pre-determined residual stress state and/or microstructure; and repeating the depositing and melting and consolidating steps to create a desired plurality of repair layers (14).

## Description

The present disclosure relates generally to repair of components and, more particularly, to an approach for removing a feature to enable access to a repair site.

It is often desirable to repair components used in a variety of applications, include aircraft propulsion applications, after they have suffered operations-related wear or damage due to use in the environments for which they were intended. While a variety of repair techniques are available, not all such components can be repaired using currently known techniques.

### SUMMARY

One aspect of this disclosure is directed to a method of repairing an aerospace part including inspecting the aerospace part, made from a base material, to identify a worn or defective repair region that requires repair. A sacrificial backing material, which serves as a platform for deposition of repair layers during a repair procedure, is attached to the aerospace part. A repair procedure is performed on the repair region using a directed energy deposition (DED) energy/powder head after which the sacrificial backing material is removed from the aerospace part and the aerospace part is returned to service. The repair procedure includes depositing, using the DED energy/powder head, a first layer of DED powder material in the repair region; melting and consolidating, using energy from the DED energy/powder head, the first layer of DED powder material to form a first repair layer having a pre-determined residual stress state and/or microstructure; and repeating the depositing and melting and consolidating steps to create a desired plurality of repair layers. The plurality of repair layers extend from a first section of the aerospace part to a second section of the aerospace part. Each of the plurality of repair layers has a pre-determined residual stress state and/or microstructure, which is imparted using selected levels of: DED powder material feed to the repair region; intensity of energy directed from the DED energy/powder head to the repair region; rate at which the DED energy/powder head traverses the repair region; and auxiliary heating and/or cooling provided to the repair region.

Another aspect of this disclosure is directed to a repaired aerospace part having a substrate made from a base material and a plurality of repair layers formed on the substrate using directed energy deposition (DED) techniques. The plurality of repair layers extend for a first section of the aerospace part to a second section of the aerospace part and each of the plurality of repair layers has a pre-determined residual stress state and/or microstructure.

### BRIEF DESCRIPTION OF THE DRAWINGS

Fig. 1 is a first schematic representation of an aerospace part undergoing a directed energy deposition (DED) repair process.
Fig. 2 is a flowchart of the repair process of the present disclosure.

### DETAILED DESCRIPTION

While a wide variant of repair techniques are available for aerospace components that have suffered operations-related wear or damage due to use in the environments for which they were intended, not all components can be repaired using currently known techniques. For example, repair of aerospace components, such as gas turbine engine components, using directed energy deposition (DED) techniques requires a substrate material having a certain thickness to support a DED build. Where an aerospace component that requires repair has only an insufficient amount of substrate material or is lacking a suitable substrate material at all, a sacrificial backing feature may be used to perform a repair using DED techniques.

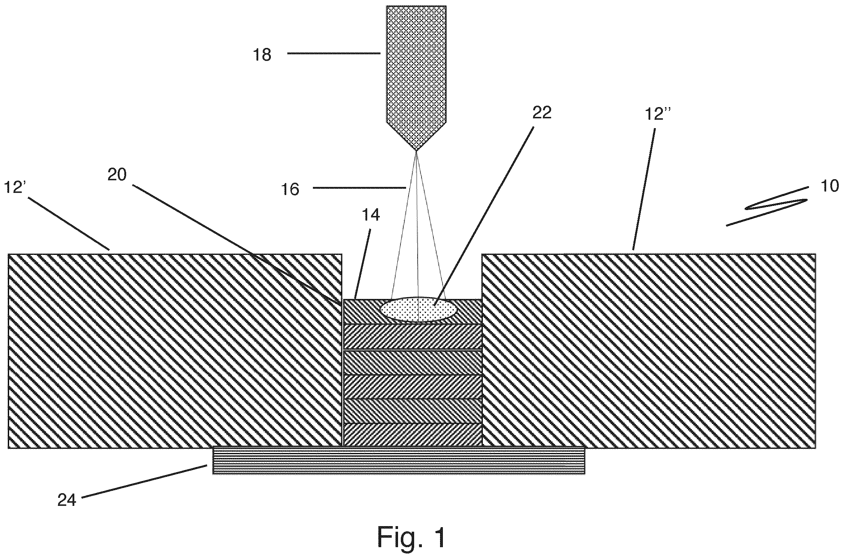

The aerospace component can lack a suitable substrate for several reasons including a desire to enable a DED repair in a through hole or the use of DED techniques to join separated features. Fig. 1 is a schematic of an aerospace part **10** that requires repair due to operational wear or damage. As shown in Fig. 1, the aerospace part 10 includes a first section **12'** separated from a second section **12",** either as a result of there being a through hole in the aerospace part **10** or because the first section **12'** is separated from the second section **12"** as a result of in-service wear or damage. For both situations, it is desired to perform a DED repair in a repair region **20** between the first section **12'** and the second section **12".** To enable the DED repair to be performed in the repair region **20** a sacrificial backing feature **24** is attached to both the first section **12'** and the second section **12"** to provide a platform or surface for building a plurality of DED repair layers **14** in the repair region **20.** The sacrificial backing feature **24** can attached to both the first section **12'** and the second section **12"** using any suitable method including tack welding, brazing, or any other suitable joining method. After the desired repair is completed, the plurality of repair layers **14** extend from the first section **12'** of the aerospace part **10** to the second section **12"** of the aerospace part **10.**

In performing the DED repair that is the subject of this disclosure, the structural requirements of the aerospace component **10** and the DED repair layers **14** must be considered. Carefully selecting the residual stress state and microstructure of the DED repair layers **14** in the repair region **20** can enable repairs that cannot be accomplished by other means and/or can extend the life of the repaired component after it is returned to service. Controlling the residual stress state and microstructure during a repair using DED techniques can take advantage of the layer-by-layer deposition inherent in the DED process to select a desired residual stress state and microstructure for each layer or specific area of each layer as it is deposited.

A pre-selected residual stress state and microstructure for each layer can be obtained by controlling the main parameters of the DED process, including DED powder feed rate to the repair region, the intensity of energy directed from the DED energy/powder heat to the repair region, the rate at which the DED energy/powder head traverses the repair region, and any auxiliary heating and/or cooling provided to the repair region. A person of ordinary skill will be able to establish the desired values for each of these main parameters as part of a repair development process for repairing a specific type of wear or damage to specific aerospace part. Among the considerations when establishing desired values for each of these main repairs is the specific (i.e., pre-determined) residual stress state and microstructure desired for each layer to be deposited and consolidated during the DED repair process. The pre-determined residual stress state and microstructure must account for the characteristics (e.g., composition, microstructure, etc.) of the base material from which the aerospace part is made, the characteristics of the DED powder material used for the repair (e.g., composition, microstructure after consolidation, etc.), the desired service life of the repaired aerospace part, and the operational conditions that the repaired aerospace part will experience when returned to service.

Continuing with Fig. 1, aerospace part **10** is a candidate for repair using DED techniques (e.g., using DED energy/powder head **18**). DED powder material is deposited from the DED energy/powder head **18** onto the sacrificial backing feature **24** as a plurality of layers **14,** initially as a layer of unconsolidated DED powder material and then as a repair layer after the DED powder material is consolidated using energy from the DED energy/powder head **18.** Although not expressly denominated as such in this disclosure, the plurality of layers **14** can be described as first layer (e.g., initially a first powder layer and then a first repair layer after consolidation), a second layer (e.g., initially a second powder layer and then a second repair layer after consolidation), a third layer (e.g., initially a third powder layer and then a third repair layer after consolidation), and so on. As discussed above, the residual stress level of each repair layer **14** can be pre-determined to provide a controlled residual stress state and microstructure for the repaired aerospace part **10.** Energy for performing melting and consolidating the DED powder material in each layer is provided by a laser (or electron beam gun) in the energy/powder head **18.** A person of ordinary skill will know how to control the DED energy/powder head **18** to raster or scan over the DED material powder to form a melt pool **22** to accomplish the desired repair with each of the plurality of layers **14** having a pre-determined microstructure. Once the desired number of repair layers **14** have been formed in the repair region **20,** the sacrificial backing feature **24** can be removed from the aerospace part **10** using any suitable method including mechanical cutting, laser cutting, mechanical grinding or mechanical machining.

The composition and amount of DED material powder and amount of energy produced by the DED energy/powder head **18** to raise the DED material powder to a temperature sufficient to form the melt pool **22** in the repair region **20** should be selected during the repair development process for a specific aerospace part **10.** For example, the DED powder material may have the same composition as the base material or a different composition than the base material. In addition, the repair development process can identify whether auxiliary heating or cooling of the repair region **20** is required to achieve the pre-selected microstructure. Once the desired repair to the on aerospace part **10** is accomplished, the aerospace part **10** can be returned to service.

A person of ordinary skill will recognize that the DED energy/powder head **18** can be any combination of DED energy and powder source known in the industry. For example, the DED energy/powder head **18** can be a unitary component as shown schematically in Fig. 1 or can be separate components that provide, respectively, energy for the DED repair process and DED powder material for the DED repair process. As known, the energy source can be a laser, electron beam gun, other energy source as deemed appropriate for a particular repair.

A person of ordinary skill will recognize that the materials used for the repair to the aerospace part **10** any of the materials typically used for the applications for which the aerospace part **10** is intended. For example, if the aerospace part **10** is used in a gas turbine application, the base material used to make the aerospace part **10** can be a titanium material for cold section (e.g., compressor) applications (see Table 1 for nonlimiting examples), a superalloy material for hot section (e.g., combustor and turbine) and disk applications (See Table 2 for nonlimiting examples), or specialty steels for other applications (e.g., shafts) (See Table 3 for nonlimiting examples). A person of ordinary skill will recognize that other materials can be used as the base material for the parts and method of this disclosure.

**Table 1: Selected Titanium Alloys**

| **Grade designation** | **Nominal chemical composition** |
|---|---|
| Ti64 | Ti-6Al-4V |
| Ti811 | Ti-8Al-1Mo-1V |
| Ti1100 | Ti-6Al-2.8Sn-4Zr-0.4Mo-0.4Si |
| Ti6242 | Ti-6Al-2Sn-4Zr-2Mo |
| Ti6242S | Ti-6Al-2Sn-4Zr-2Mo-0.2Si |

**Table 2: Selected Superalloys**

| **Grade designation** | **Nominal chemical composition** |
|---|---|
| Hastelloy X | Ni22Cr1.5Col.9Fe0.7W9Mo0.07C0.005B |
| IN 100 | 60NilOCr15Co3Mo4.7Ti5.5A10.15C 0.015B0.06Zr1.0V |
| IN 625 | 58.8Ni21.5Cr9Mo5Fe3.65Ni0.5A10.5Ti0.05C0.5Mn0.5Si0.015S0.015P |
| IN 713 | 74.2Ni12.5Cr4.2Mo2Nb0.8Ti6.1Al0.1Zr0.12C0.01B |
| IN 718 | 53Ni19Cr18.5Fe3Mo0.9Ti0.5A15.1Cb0.03C |
| IN 738 | 61.5Nil6Cr8.5Col.75Mo2.6W1.75Ta0.9Nb3.4Ti3.4A10.04Zr0.11C0.01B |
| IN 792 | 60.8Nil2.7Cr9Co2Mo3.9W3.9Ta4.2Ti3.2A10.1Zr0.21C0.02B |
| Rene 41 | 56Nil9Crl0.5Co9.5Mo3.2Til.7A10.01Zr0.08C0.005B |
| Rene 77 | 53.5Nil5Cr18.5Co5.2Mo3.5Ti4.25A10.08C0.015B |
| Rene 80 | 60.3Ni14Cr9.5Co4Mo4W5Ti3al0.03Zr0.17C0.015B |
| Rene 80+Hf | 59.8Nil4Cr9.5Co4Mo4W0.8Hf4.7Ti3Al0.01Zr0.15C0.015B |
| Rene88 DT | 56.4Ni16cr13Co4Mo4W0.7Nb3.7Ti2.1Al0.03C0.015B0.03Zr |
| Rene 95 | 61Nil4Cr8Co3.5Mo3.5W3.5Nb2.5Ti3.5Al0.16C0.01B0.05Zr |
| Rene 100 | 62.6Ni9.5Cr15Co3Mo4.2Ti5.5A10.06Zr0.15C0.015B |
| MERL-76 | 54.4Ni12.4Cr18.6co3.3Mo1.4Nb4.3Ti5.1Al0.02C0.03B0.35Hf0.06Zr |
| Udimet 720 | 55Ni18Cr14.8Co3Mo1.25W5Ti2.5Al0.035C0.033B0.03Zr |
| Udimet 720LI | 57Ni16Cr15Co3Mo1.25W5Ti2.5Al0.025C0.018B0.03Zr |
| MAR-M200 | 59.5Ni9Cr10Co12.5W1.8Nb2Ti5Al0.05Zr0.15C0.015B |
| MAR-M200+Hf | Ni8Cr9Co12W2Hf1Nb1.9Ti5.0Al0.03Zr0.13C0.015B |
| MAR-M246 | 59.8Ni9Cr10Co2.5Mo10W1.5Ta1.5Ti5.5Al0.05Zr0.14C0.015B |
| MAR-M246+Hf | Ni9Cr10Co2.5Mo10W1.5Hf1.5Ta1.5Ti5.5Al0.05Zr0.15C0.015B |
| Udimet 700 | 59Ni14.3Cr14.5Co4.3Mo3.5Ti4.3Al0.02Zr0.08C0.015B |
| Udimet 710 | 54.8Ni18Cr15Co3Mo1.5W2.5Ti5Al0.08Zr0.13C |
| Waspaloy | 5 8Ni 19Cr 13 Co4Mo3 Ti 1.4 Al |

**Table 3: Selected Specialty Steels**

| **Grade designation** | **Nominal chemical composition** |
|---|---|
| CrMoV steel | FelCr0.5Nil.25Mo0.25V0.30C |
| M152 | Fe12Cr2.5Ni1.7Mo0.3V0.12C |

While the base material used for the aerospace component **10** and material selected for the plurality of repair layers **14** is important to the properties and function of the aerospace component **10** following repair, the material used to make the sacrificial backing feature **24** is less important because the sacrificial backing feature **24** is removed before the repaired aerospace component **10** is returned to service. As such, the sacrificial backing feature **24** can be made from any material that is compatible with the DED process described above. For example, the sacrificial backing feature **24** can be made from one of the alloys listed in Tables 1-3.

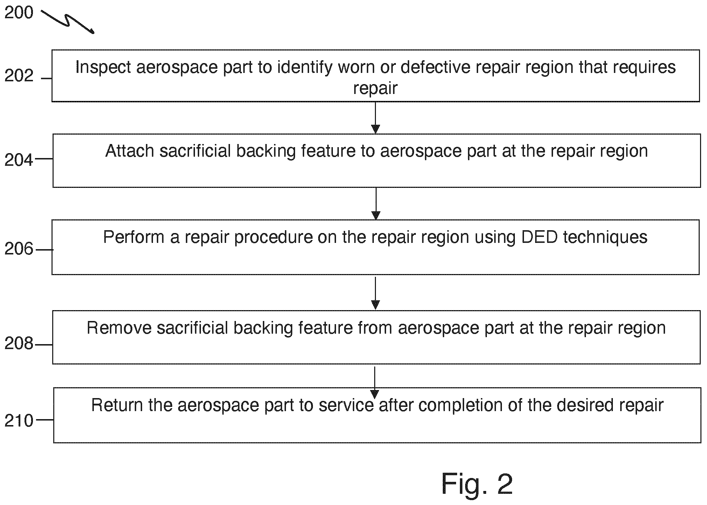

Fig. 2 is a flowchart of the overall repair procedure **200** of this disclosure. At step **202,** the aerospace part **10** is inspected to identify a worn or defective repair region **20** that requires a repair. At step **204,** a sacrificial backing feature **24** is attached to the aerospace part 10 to provide a platform for performing the DED repair. At step **206,** a DED energy/powder head **18** deposits a plurality of layers 14 on the sacrificial backing feature **24** to accomplish the repair. As described above, each of the plurality of layers **14** can be formed with a pre-determined residual stress state and microstructure to provide the repaired aerospace part **10** with a controlled residual stress state and microstructure. At step **208,** the sacrificial backing feature **24** is removed from the repaired aerospace part **10.** Finally, at step **210** the aerospace part **10** is returned to service after completion of the desired repair. A person of ordinary skill will know how to perform each of these steps based upon the present disclosure and knowledge of manufacturing processes.

Using the repair technique described in this disclosure, DED techniques can be used to repair aerospace parts **10** that would not otherwise be eligible for DED repairs. The use of the sacrificial backing feature **24** permits repairs in through holes, across separate sections of the aerospace part **10,** and in other situations. Controlling DED process parameters to provide a pre-determined residual stress state and/or microstructure in each layer (or specific area within each layer) can provide desired mechanical, physical, and function properties to meet desired structural and functional requirements for the repaired aerospace part. As a result, the number of available repair methods for aerospace parts **10** is expanded.

### Discussion of Possible Embodiments

The following are non-exclusive descriptions of possible embodiments of the present invention.

A method of repairing an aerospace part, which is made from a base material, includes inspecting the aerospace part to identify a worn or defective repair region that requires repair. A sacrificial backing material, which serves as a platform for deposition of repair layers during a repair procedure, is attached to the aerospace part. A repair procedure is performed on the repair region using a directed energy deposition (DED) energy/powder head. The repair procedure includes depositing, using the DED energy/powder head, a first layer of DED powder material in the repair region; melting and consolidating, using energy from the DED energy/powder head, the first layer of DED powder material to form a first repair layer having a first pre-determined residual stress state and/or microstructure; and repeating the depositing and melting and consolidating steps to create a desired plurality of repair layers. Each of the plurality of repair layers has a residual stress state and/or pre-determined microstructure. The microstructure of each of the plurality of repair layers is imparted using selected levels of DED powder material feed to the repair region, intensity of energy directed from the DED energy/powder head to the repair region, rate at which the DED energy/powder head traverses the repair region, and auxiliary heating and/or cooling provided to the repair region. After the completion of the desired repair procedure, the sacrificial backing feature is removed and the aerospace part is returned to service.

The method of the preceding paragraph can optionally include any one or more of the following features, configurations and/or additional elements:
The method of the preceding paragraph, wherein the base material comprises a titanium alloy, a superalloy material, or a specialty steel alloy.

The method of the any of the preceding paragraphs, wherein the repair procedure includes filling cracks in the repair region.

The method of the preceding paragraph, wherein the DED powder material has the same composition as the base material.

The method of the preceding paragraph, wherein the DED powder material has a different composition as the base material.

The method of the any of the preceding paragraphs, wherein the repair procedure includes reestablishing a worn surface contour in the repair region.

The method of the preceding paragraph, wherein the DED powder material has the same composition as the base material.

The method of the preceding paragraph, wherein the DED powder material has a different composition as the base material.

The method of the any of the preceding paragraphs, wherein the sacrificial backing feature is formed from a material having the same composition as the base material.

The method of the any of the preceding paragraphs, wherein the sacrificial backing feature is formed from a material having a different than the base material.

The method of the any of the preceding paragraphs, wherein the aerospace part is a component of a gas turbine engine.

A repaired aerospace part has a substrate made from a base material and a plurality of repair layers formed on the substrate using directed energy deposition (DED) techniques. The plurality of repair layers extend from a first section of the aerospace part to a second section of the aerospace part and each of the plurality of repair layers has a pre-determined residual stress state and/or microstructure.

The repaired aerospace part of the preceding paragraph can optionally include any one or more of the following features, configurations and/or additional elements:
The repaired aerospace part of the preceding paragraph, wherein the plurality of repair layers have the same composition as the base material.

The repaired aerospace part of the preceding paragraph, wherein the plurality of repair layers have a different composition than the base material.

The repaired aerospace part of the preceding paragraph, wherein the aerospace part is a component of a gas turbine engine.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of repairing an aerospace part (10), comprising:
inspecting the aerospace part (10) to identify a worn or defective repair region (20) that requires repair, wherein the aerospace part (10) is made from a base material;
attaching a sacrificial backing material (24) to the aerospace part (10), wherein the sacrificial backing material (24) serves as a platform for deposition of repair layers (14) during a repair procedure;
performing, using a directed energy deposition (DED) energy/powder head (18), the repair procedure on the repair region (20), wherein the repair procedure includes:
depositing, using the DED energy/powder head (18), a first layer of DED powder material in the repair region (20);
melting and consolidating, using energy from the DED energy/powder head (18), the first layer of DED powder material to form a first repair layer (14) having a pre-determined residual stress state and/or microstructure;
repeating the depositing and melting and consolidating steps to create a
desired plurality of repair layers (14), wherein the plurality of repair layers (14) extend from a first section (12') of the aerospace part (10) to a second section (12") of the aerospace part (10) and
each of the plurality of repair layers (14) has a pre-determined residual stress state and/or microstructure; wherein the pre-determined residual stress state and/or microstructure of each of the plurality of repair layers (14) is imparted using selected levels of:
DED powder material feed to the repair region (20);
intensity of energy directed from the DED energy/powder head (18) to the repair region (20);
rate at which the DED energy/powder head (18) traverses the repair region (20); and
auxiliary heating and/or cooling provided to the repair region (20);
removing the sacrificial backing plate from the aerospace part (10) after completion of the desired repair procedure;
returning the aerospace part (10) to service after completion of the desired repair procedure.

2. The method of claim 1, wherein the base material comprises a titanium alloy, a superalloy material, or a specialty steel alloy.

3. The method of claim 1 or 2, wherein the repair procedure includes filling a through hole in the repair region (20).

4. The method of claim 1, 2 or 3, wherein the repair procedure includes j oining two sections of the aerospace part (10) at the repair region (20).

5. The method of any preceding claim, wherein the DED powder material has the same composition as the base material.

6. The method of any of claims 1 to 4, wherein the DED powder material has a different composition than the base material.

7. The method of any preceding claim, wherein the sacrificial backing feature (24) is formed from a material having the same composition as the base material.

8. The method of any of claims 1 to 6, wherein the sacrificial backing feature (24) is formed from a material having a different than the base material.

9. The method of any preceding claim, wherein the aerospace part (10) is a component of a gas turbine engine.

10. A repaired aerospace part (10), comprising:
a substrate made from a base material; and
a plurality of repair layers (14) formed on the substrate using directed energy
deposition (DED) techniques, wherein the plurality of repair layers (14) extend from a first section (12') of the aerospace part (10) to a second section (12") of the aerospace part (10) and each of the plurality of repair layers (14) has a pre-determined residual stress state and/or microstructure.

11. The repaired aerospace part (10) of claim 10, wherein the base material comprises a titanium alloy, a superalloy material, or a specialty steel alloy.

12. The repaired aerospace part (10) of claim 10 or 11, wherein the plurality of repair layers (14) have the same composition as the base material.

13. The repaired aerospace part (10) of claim 10 or 11, wherein the plurality of repair layers (14) have a different composition than the base material.

14. The repaired aerospace part (10) of any of claims 9 to 13, wherein the aerospace part (10) is a component of a gas turbine engine.
